## Europäisches Patentamt
## European Patent Office
## Office européen des brevets

(19)

(11) Numéro de publication: **0 264 304 B1**

(12) **FASCICULE DE BREVET EUROPEEN**

(45) Date de publication du fascicule du brevet:
**25.10.89**

(51) Int. Cl.⁴: **B05D 1/32**

(21) Numéro de dépôt: **87401876.5**

(22) Date de dépôt: **12.08.87**

(54) **Ensemble de marouflage, notamment d'au moins une partie de pare-chocs de véhicule automobile.**

(30) Priorité: **12.09.86 FR 8612813**

(43) Date de publication de la demande:
**20.04.88 Bulletin 88/16**

(45) Mention de la délivrance du brevet:
**25.10.89 Bulletin 89/43**

(84) Etats contractants désignés:
**DE ES GB IT SE**

(56) Documents cités:
**GB-A- 2 158 368**
**US-A- 1 664 402**
**US-A- 2 161 030**
**US-A- 3 565 038**

(73) Titulaire: **ECIA - EQUIPEMENTS ET COMPOSANTS POUR L'INDUSTRIE AUTOMOBILE, F-25400 Audincourt (Doubs)(FR)**

(72) Inventeur: **Peyron, Armand Paul, 29 Rue Marcel Paul, F-25400 Audincourt(FR)**

(74) Mandataire: **Moncheny, Michel et al, c/o Cabinet Lavoix 2 Place d'Estienne d'Orves, F-75441 Paris Cedex 09(FR)**

## Description

La présente invention concerne un ensemble de marouflage, notamment d'au moins une partie de pare-chocs de véhicule automobile.

Les stylistes de l'industrie automobile imposent de plus en plus une mise en peinture partielle des pare-chocs de véhicule automobile, pour que ceux-ci présentent par exemple une partie de la même couleur que la carrosserie du véhicule. Les procédés connus, consistant par exemple à fixer une feuille de papier sur la partie que l'on désire maroufler, présentent un certain nombre d'inconvénients notamment au niveau du temps nécessaire pour leur mise en œuvre et des coûts de telles opérations.

On a aussi proposé des caches protecteurs extensibles pour peinture en bâtiment et tout spécialement de locaux. Le document US-A 3 565 038 propose des caches qui tiennent par leur propre poids ou sont appliqués et maintenus à la main; aucun dispositif d'accrochage et maintien sur l'endroit à masquer n'est prévu. De plus les positions respectives des pièces varient d'une épaisseur de matière, ce qui forme des escaliers préjudiciables à la fonction de masquage total. Tout ceci nuit à cette fonction "masque" et le flux d'un pistolet par exemple peut s'insérer dans ces interstices et nuire à la rectitude de la séparation entre les zones protégées ou non protégées.

Le but de l'invention est donc de résoudre ces problèmes.

A cet effet, l'invention a pour objet un ensemble de marouflage du type de celui exposé dans le préambule de la revendication principale et dont les particularités ressortent notamment de la partie caractérisante de celle-ci.

L'invention sera mieux comprise à l'aide de la description qui va suivre, donnée uniquement à titre d'exemple et faite en se référant aux dessins annexés, sur lesquels:

- la Fig. 1 représente une vue partielle en perspective d'un ensemble de marouflage selon l'invention;
- la Fig. 2 représente une vue en coupe d'un pare-chocs sur lequel est disposé un élément entrant dans la constitution d'un ensemble de marouflage selon l'invention ;
- la Fig. 3 représente un premier mode de réalisation de moyens de fixation d'un élément entrant dans la constitution d'un ensemble selon l'invention ;
- la Fig. 4 représente un second mode de réalisation de moyens de fixation d'un élément entrant dans la constitution d'un ensemble selon l'invention ; et
- les Fig. 5 et 6 représentent respectivement une vue de dessus et une vue en coupe des bords d'éléments adjacents se chevauchant.

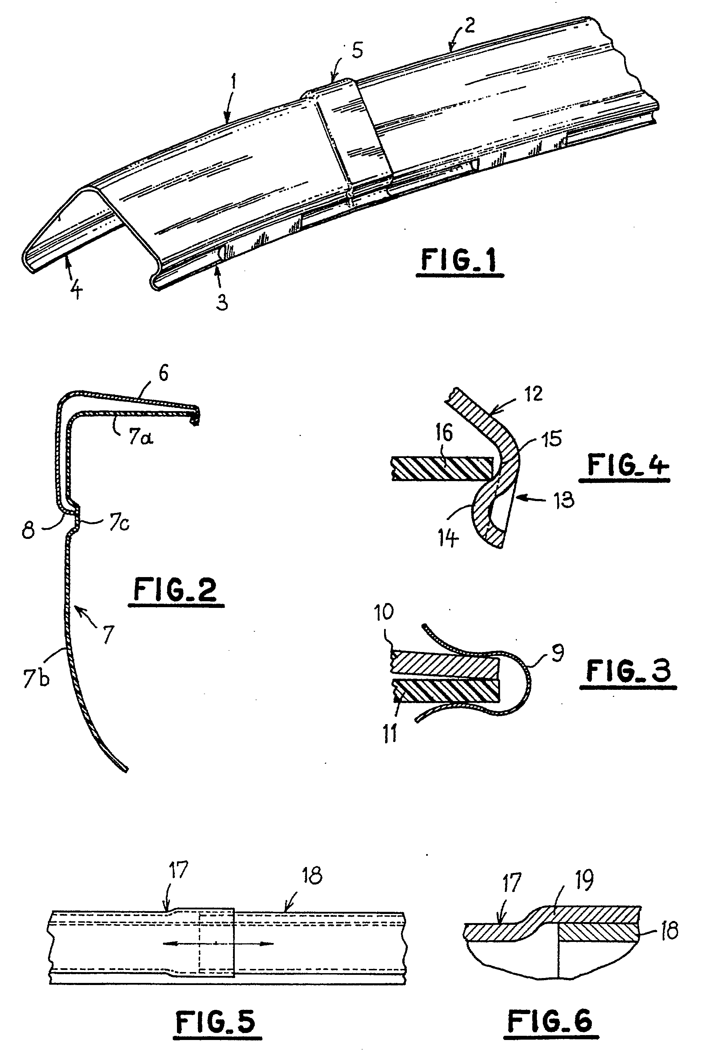

Ainsi qu'on peut le voir sur la Fig. 1, un ensemble de marouflage selon l'invention comporte une série d'éléments, par exemple 1 et 2, disposés bout à bout et dont chacun comporte au niveau de ses bords longitudinaux des moyens 3, 4 de fixation notamment sur un pare-chocs de véhicule automobile dont il y a lieu de maroufler au moins une partie. L'un des bords transversaux 5 de chaque élément, par exemple 1, est agencé pour chevaucher le bord correspondant de l'élément adjacent, par exemple 2. Ainsi qu'on l' a représenté sur la Fig. 2, un élément 6, entrant dans la constitution d'un ensemble de marouflage selon l'invention, en position sur un pare-chocs 7, présente une forme approximativement complémentaire à celle de la partie de pare-chocs à maroufler, c'est-à-dire dans le cas illustré, une section de forme générale en L. Dans l'exemple représenté sur cette figure, l'élément 6 recouvre la partie supérieure 7a du pare-chocs de sorte qu'il est possible de peindre la partie basse 7b de celui-ci.

Les moyens de fixation de l'élément 6 sur le pare-chocs comprennent, sur l'un des bords longitudinaux de cet élément, un rebord 8 adapté pour coopérer avec un décrochement 7c du pare-chocs.

Les moyens de fixation sont constitués, sur l'autre des bords longitudinaux de cet élément, par exemple par des attaches élastiques 9, telles que représentées sur la Fig. 3, de section de forme générale en U, dont les extrémités des branches sont évasées et destinées à bloquer cet autre bord longitudinal de chaque élément 10 sur le bord longitudinal correspondant du pare-chocs 11.

Cependant, selon un autre mode de réalisation représenté sur la Fig. 4, ces moyens de fixation comprennent un rebord 13 de l'élément, comportant au moins une nervure 14 définissant au moins un logement 15 de réception du bord longitudinal correspondant du pare-chocs 16.

Ces moyens de fixation permettent d'accrocher et de décrocher de manière très simple les éléments sur la pare-chocs.

Ainsi qu'il est représenté sur les Fig. 5 et 6, chaque élément, par exemple 17, présente un bord transversal agencé pour chevaucher le bord correspondant de l'élément adjacent, par exemple 18. A cet effet, chaque élément présente un décrochement 19 correspondant à l'épaisseur des éléments.

Il y a également lieu de noter que les éléments sont par exemple constitués de matière thermoplastique, ce qui permet d'absorber les variations dimensionnelles des pièces lors de leur mise en place.

Par ailleurs, la durée de vie de tels éléments peut être accrue en disposant sur ceux-ci un agent anti-adhérant ou un film adhésif de manière à faciliter leur nettoyage.

Enfin, bien que dans l'exemple décrit on ait mentionné le marouflage d'une partie de pare-chocs, il va de soi que des applications à d'autres objets sont possibles.

## Revendications

1. Ensemble de marouflage, notamment d'au moins une partie de pare-chocs de véhicule automobile qui comporte une série d'éléments (1, 2; 6; 10; 12; 17, 18), disposés bout à bout dont l'un des bords transversaux (5) est agencé pour chevaucher le bord correspondant de l'élément adjacent caractérisé en ce que ces éléments sont de forme à peu près complémentaire à celle du pare-chocs (7a) à maroufler et en ce que chacun d'aux comporte au niveau de ses bords longitudinaux des moyens de fixation (3, 4) sur ce parechocs.

2. Ensemble de marouflage selon la revendication 1, caractérisé en ce que les moyens de fixation (3, 4) comprennent sur l'un des bords longitudinaux de chaque élément (6), un rebord (8) adapté pour coopérer avec un décrochement (7c) du pare-chocs (7).

3. Ensemble de marouflage selon la revendication 2, caractérisé en ce que les moyens de fixation comprennent, sur l'autre des bords longitudinaux de chaque élément (10), des attaches élastiques (9) de section de forme générale en U dont les extrémités des branches sont évasées et destinées à bloquer cet autre bord longitudinal des chaque élément (10), sur le bord longitudinal correspondant du pare-chocs (11).

4. Ensemble de marouflage selon la revendication 2, caractérisé en ce que les moyens de fixation comprennent, sur l'autre des bords longitudinaux de chaque élément (12), un rebord (13) comportant au Opmoins une nervure (14) définissant au moins un logement (15) de réception du bord longitudinal correspondant du pare-chocs (16).

5. Ensemble de marouflage selon l'une quelconque des revendications précédentes, caractérisé en ce que le bord transversal de chaque élément (17), agencé pour chevaucher le bord correspondant de l'élément adjacent (18), présente un décrochement (19) correspondant à l'épaisseur des éléments.

6. Ensemble de marouflage selon l'une quelconque des revendications précédentes, caractérisé en ce que ces éléments sont constitués de matière thermoplastique.

7. Ensemble de marouflage selon l'une quelconque des revendications précédentes, caractérisé en ce que ces éléments présentent une section de forme générale en L.

**Patentansprüche**

1. Abdecksatz, insbesondere für mindestens einen Teil der Stoßstange eines Kraftfahrzeugs, mit einer Anzahl von mit ihren Enden aneinanderstoßenden Elementen (1, 2; 6; 10; 12; 17, 18), deren eine Querkante (5) so ausgebildet ist, daß sie die entsprechende Kante des daneben angeordneten Elementes übergreift, dadurch gekennzeichnet, daß diese Elemente eine in etwa komplementäre Form zu der abzudeckenden Stoßstange (7a) haben und daß jede von diesen auf Höhe ihrer Längskanten Mittel (3, 4) zur Befestigung an dieser Stoßstange aufweisen.

2. Abdecksatz nach dem Anspruch 1, dadurch gekennzeichnet, daß die Befestigungsmittel (3, 4) an einer der Längskanten eines jeden Elements (6) einen umgebogenen Rand (8) für den Eingriff in eine Ausnehmung (7c) der Stoßstange (7) aufweisen.

3. Abdecksatz nach dem Anspruch 2, dadurch gekennzeichnet, daß die Befestigungsmittel an der anderen der Längskanten eines jeden Elements (10) elastische Spangen (9) mit im wesentlichen U-förmigem Querschnitt aufweisen, deren Schenkelenden aufgeweitet und dazu bestimmt sind, diese andere Längskante eines jeden Elements (10) an der entsprechenden Längskante der Stoßstange (11) zu verriegeln.

4. Abdecksatz nach dem Anspruch 2, dadurch gekennzeichnet, daß die Befestigungsmittel an der anderen der Längskanten eines jeden Elements (12) einen umgebogenen Rand (13) mit mindestens einer Rippe (14) aufweisen, welche mindestens eine Ausnehmung (15) zur Aufnahme der entsprechenden Längskante der Stoßstange (16) aufweist.

5. Abdecksatz nach einem der vorangehenden Ansprüche, dadurch gekennzeichnet, daß die Querkante eines jeden Elements (17), welche so ausgebildet ist, daß sie die entsprechende Kante des daneben angeordneten Elements (18) übergreift, eine der Dicke der Elemente entsprechende Ausnehmung aufweist.

6. Abdecksatz nach einem der vorangehenden Ansprüche, dadurch gekennzeichnet, daß diese Elemente aus einem thermoplastischen Material bestehen.

7. Abdecksatz nach einem der vorangehenden Ansprüche, dadurch gekennzeichnet, daß diese Elemente einen allgemein L-förmigen Querschnitt aufweisen.

**Claims**

1. A masking assembly, more particularly for masking a portion of a motor vehicle bumper and comprising a series of elements (1, 2; 6; 10; 12; 17, 18) which are disposed end to end and one (5) of whose transverse edges is adapted to overlap the corresponding edge of the adjacent element, characterized in that the elements are in shape substantially complementary to the shape of the bumper (7a) to be masked, and each of the elements comprises at its longitudinal edges means (3, 4) for attachment to the bumper.

2. A masking assembly according to claim 1, characterized in that the attaching means (3, 4) comprise on one (6) of the longitudinal edges of each element a rim (8) adapted to cooperate with a recess (7c) in the bumper (7).

3. A masking assembly according to claim 2, characterized in that the attaching means comprise on the other (10) of the longitudinal edges of each element resilient fasteners (9) of generally U-shaped section, the ends of whose arms are flared and adapted to lock such other longitudinal edge (10) of each element to the corresponding longitudinal edge of the bumper (11).

4. A masking assembly according to claim 2, characterized in that the attaching means comprise on the other (12) of the longitudinal edges of each element a rim (13) comprising at least one rib (14) defining at least one recess (15) for receiving the corresponding longitudinal edge of the bumper (16).

5. A masking assembly according to any of the preceding claims, characterized in that the transverse edge (17) of each element, which is adapted to overlap the corresponding edge of the adjacent element (18), has a discontinuity (19) corresponding to the thickness of the elements.

6. A masking assembly according to any of the preceding claims, characterized in that the elements are made of a thermoplastic material.

7. A masking assembly according to any of the preceding claims, characterized in that the elements are generally L-shaped in section.

FIG.1

FIG.2

FIG.4

FIG.3

FIG.5

FIG.6